# EUROPEAN PATENT APPLICATION

(11) **EP 4 390 233 A1**
(43) Date of publication of application: **26.06.2024**
(21) Application number: 23215909.5
(22) Date of filing: 12.12.2023
(51) Int. Cl.: F24C 7/08

(54) **COOKING DEVICE, SYSTEM AND CONTROL METHOD THEREOF**

(30) Priority: 23.12.2022 CN 202211660995
(71) Applicant: BSH Hausgeräte GmbH, 81739 München (DE)
(72) Inventor: Yang, Hui, Nanjing, 210046 (CN); Li, Chao, Nanjing City, 210014 (CN)

(57) **Abstract**

A cooking device and a control method and a control system thereof are provided. According to the control method, a cooking state of a food at a preset time point in a cooking process is recognized through a preset doneness recognition model, and a manner of controlling operation of the cooking device is determined in combination with a relationship between an actual cooking duration of the food at the preset time point and a preset cooking duration. Through this implementation, a correlation between a dynamic change of the food in the cooking process and doneness of the food is established based on the dynamic change during the cooking and impact of the dynamic change on the doneness, and then the cooking device can be controlled in real time based on the cooking state in the cooking process, thereby optimizing a cooking result and improving user experience.

## Description

### TECHNICAL FIELD

Embodiments of the present invention relate to the technical field of household appliances, and in particular, to a cooking device, system and a control method thereof.

### BACKGROUND

In recent years, cooking devices including a microwave oven and an oven have been increasingly more widely used, and have become one of the indispensable household appliances for every household. Generally, the existing cooking device can only mechanically heat a food according to parameters such as time and temperature set by a user. Under this circumstance, the food is easily overcooked or even burnt, or the food cannot be done under set parameters due to insufficient cooking, which requires the user to increase the cooking time or temperature. It can be seen that the cooking device is not intelligent enough, the cooking effect is not good, and user experience is not good.

For the above situation, an oven in the related art obtains an internal image thereof through a camera and presents the image to the user, so that the user can know a cooking state of the food. However, the scheme of showing the internal cooking state of the food still requires the user to adjust the cooking parameter based on the observed image. If the user does not intervene in time, the cooking effect is also affected, and the operating process cannot be intelligently controlled.

Further, in the related art, the oven mainly performs image recognition on the food, and then sets a parameter to start cooking, and the image recognition algorithm in the middle process does not intervene. This type of model belongs to static algorithm, which is relatively simple and easy to realize, cannot control the doneness of the food, has a relatively large cooking failure rate, and leads to poor user experience.

### SUMMARY

An object of embodiments of the present invention is to provide an improved cooking device, system and a control method thereof.

Therefore, an embodiment of the present invention provides a control method of a cooking device, including: presetting N doneness recognition models respectively corresponding to N time points of doneness, where the models are configured to respectively recognize cooking states of a food at the corresponding time points of doneness in a cooking process, the time points of doneness are set based on a time sequence of the cooking process, each of the time points of doneness corresponds to a preset duration interval, and N is a positive integer greater than or equal to 1; obtaining a first food image of the food in the cooking process, and recognizing the first food image through an n^{th} doneness recognition model to determine whether a current cooking state of the food reaches a corresponding n^{th} time point of doneness, where n is a positive integer less than or equal to N; determining whether a cooking duration for the food to reach the current cooking state falls within a duration interval corresponding to the n^{th} time point of doneness when the current cooking state of the food reaches the corresponding n^{th} time point of doneness; and controlling the cooking device based on a result of the determination.

Through this implementation, the cooking state can be monitored in the cooking process, and the cooking device can be controlled in real time based on the cooking state of the food in the cooking process, to realize dynamic and intelligent control of the cooking device, thereby optimizing a cooking result and improving user experience.

Specifically, cooking states of a plurality of cooking time points in the cooking process may be monitored based on the preset model, so that the cooking parameter can be dynamically adjusted, and the device can automatically intervene in the cooking process in advance, to ensure that the food is cooked to expected doneness and avoid overcooking or undercooking of the food. For example, when it is detected that the food does not reach the predetermined cooking state, the cooking time is increased or the heating power is increased, so that the cooking process is interfered in advance before the cooking is finished, and the situation that the food is not done at the end of cooking is avoided. When it is detected that the food is overcooked relative to the preset cooking state, the cooking time is reduced or the heating power is reduced, so that the cooking process is interfered in advance before the cooking is finished, and the situation that the food is overcooked at the end of cooking is avoided.

Optionally, the method includes: determining that the current cooking state of the food reaches the corresponding n^{th} time point of doneness when the first food image matches the n^{th} doneness recognition model.

Optionally, the method includes: obtaining M consecutive first food images of the food in a preset time in the cooking process, where M is a positive integer greater than or equal to 1; and determining that the current cooking state of the food reaches the corresponding n^{th} time point of doneness when all of the M first food images are the same as the n^{th} doneness recognition model.

Optionally, the method further includes: continuously obtaining the first food image of the food in the cooking process when at least one of the first food images is different from the n^{th} doneness recognition model.

Optionally, when the cooking duration for the food to reach the current cooking state is not within the duration interval corresponding to the n^{th} time point of doneness, control is performed to increase or decrease a total cooking duration of the cooking device. In this way, the food is cooked to expected doneness, and undercooking or overcooking is avoided.

Optionally, when the cooking duration for the food to reach the current cooking state is not within the duration interval corresponding to the n^{th} time point of doneness, prompt information indicating that the current cooking state is an abnormal cooking state is displayed.

Optionally, the method further includes: determining whether the n^{th} time point of doneness is a last time point in the cooking process; and determining, based on a relationship between the cooking duration for the food to reach the last time point and a preset average total cooking duration, whether to increase the total cooking duration of the cooking device by a remaining time t when the n^{th} time point of doneness is the last time point, where the remaining time t is a difference between the preset average total cooking duration of the food in the cooking process and a preset average cooking duration required for reaching the last time point.

Optionally, the method further includes: performing control to increase a cooking time of the cooking device by the remaining time t if the cooking duration for the food to reach the last time point does not reach the preset average total cooking duration; or otherwise, controlling the cooking device to stop operating. When the cooking process comes to an end, it may be monitored again whether the food is close to doneness, and the cooking device is controlled based on the result of the determination. Therefore, a situation that the food is not done after cooking is finished, or the food is still cooked after being done is avoided, which wastes resources and damages the taste of the food.

Optionally, the method further includes: obtaining a corresponding internal temperature of the food at the n^{th} time point of doneness; and controlling the cooking device based on the internal temperature.

Optionally, when the internal temperature is lower than a preset standard temperature corresponding to the n^{th} time point of doneness, control is performed to increase a cooking time of the cooking device; or otherwise, control is performed to decrease the cooking time of the cooking device.

When the cooking state is monitored through image recognition, the cooking device is controlled based on the internal temperature of the food, so that the cooking parameter can be better controlled to obtain the expected food cooking effect. For example, during cooking, at a cooking time point, the internal temperature of the food does not reach the expected temperature, which may lead to a problem that the food is not well-done. The cooking time and the cooking temperature are adjusted by monitoring the internal temperature in real time. On the contrary, when the internal temperature of the food at the cooking time point is excessively high, overcooking of the food may be caused, and the overcooking may be avoided by monitoring the internal temperature in real time and intervening in advance.

Further, during cooking of some foods, a food almost does not change in appearance and color in a specific cooking process, which cannot be effectively recognized through an image. The cooking effect can be better controlled based on the internal temperature.

Optionally, the method further includes: before the method, presetting a food recognition model configured to recognize a food; obtaining a second food image of a to-be-cooked food; recognizing the second food image through the food recognition model; and determining N doneness recognition models corresponding to the food based on a result of the recognition. A food type is recognized through image recognition, and a model corresponding to the food type is obtained, to automatically recognize the food and monitor the food cooking process, so that the cooking device can operate intelligently.

Optionally, the method further includes: before the method, presetting a food recognition model for food recognition; obtaining an image of cooked food; recognizing the image through a food recognition model; determining a cooking state monitoring model corresponding to the food based on the recognition result. A food type is recognized through image recognition, and a cooking state monitoring model corresponding to the food type is obtained, to automatically recognize the food and monitor the food cooking process, so that the cooking device can operate intelligently.

Therefore, this embodiment of the present invention further provides a cooking device, including a body and a control module arranged on the body. The control module is configured to perform the method described above.

Therefore, this embodiment of the present invention further provides a control system of a cooking device, including a control module. The control module is configured to perform the method described above.

Optionally, the control system further includes a cooking device. The control module is communicatively connected to the cooking device, and the cooking device operates based on a cooking control parameter sent by the control module.

The control module may be arranged on the cooking device, or may be arranged on another server other than the cooking device. If the control module is arranged on another server, the cooking device and the another server may be connected through remote communication, and the control module performs the above method and sends a control parameter to the cooking device to control the cooking device to operate. Further, the control module is arranged on a remote server, and data processing such as recognition is performed on the remote server, which can facilitate training, learning, and updating of data such as a model, and reduce complexity of the cooking device.

Therefore, this embodiment of the present invention further provides a computer-readable storage medium. The computer-readable storage medium is a non-volatile storage medium or a non-transient storage medium, on which a computer program is stored, and when the computer program is run by a processor, the steps of the above method are performed.

### BRIEF DESCRIPTION OF THE DRAWINGS

- FIG. 1: is a schematic diagram of a cooking device according to an embodiment of the present invention;
- FIG. 2: is a schematic side view of a cooking device according to an embodiment of the present invention;
- FIG. 3: is a flowchart of a control method of a cooking device according to an embodiment of the present invention;
- FIG. 4: is a logical schematic diagram of establishment of a time point of doneness according to an embodiment of the present invention; and
- FIG. 5a and FIG. 5b: are a flowchart of a control method of an oven according to an embodiment of the present invention.

In the accompanying drawings:
1-cooking device; 10-body; 101-input/output module; 20-chamber; 30-door; 11-control module;
12-heating module; 13-image capture apparatus; 14-tray; 2-cooked object.

### DETAILED DESCRIPTION

This embodiment of the present invention provides a control method of a cooking device. Generally, a cooking state of a food at a preset time point in a cooking process is recognized through a preset doneness recognition model, and a manner of controlling operation of the cooking device is determined in combination with a relationship between an actual cooking duration of the food at the preset time point and a preset cooking duration.

Through this implementation, a correlation between a dynamic change of the food in the cooking process and doneness of the food is established based on the dynamic change during the cooking and impact of the dynamic change on the doneness, and then the cooking device can be controlled in real time based on the cooking state of the food in the cooking process, to realize dynamic and intelligent control of the cooking device, thereby optimizing a cooking result and improving user experience.

To make the foregoing objectives, characteristics, and advantages of the present invention clearer and easier to understand, specific embodiments of the present invention are described in detail below with reference to accompanying drawings.

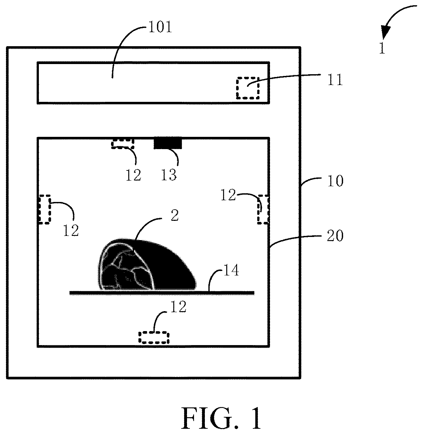

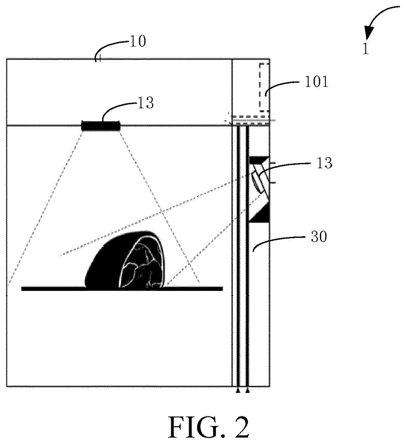

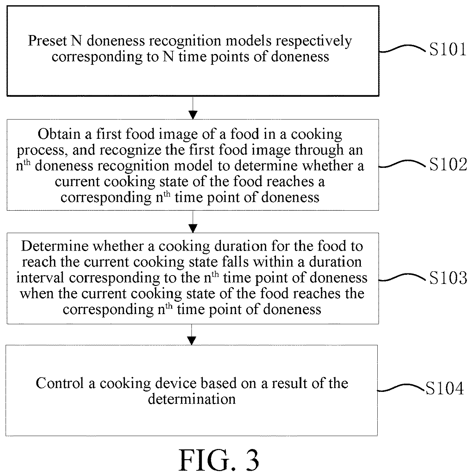

FIG. 1 and FIG. 2 are schematic diagrams of a cooking device according to an embodiment of the present invention. FIG. 3 is a flowchart of a control method of a cooking device according to an embodiment of the present invention. The cooking device 1 shown in FIG. 1 and FIG. 2 may perform the control method shown in FIG. 3 to recognize a cooking state of a food during cooking, monitor the cooking state of the food based on a recognition result, and dynamically and intelligently adjust an operating parameter of the cooking device.

Specifically, referring to FIG. 1 and FIG. 2, the cooking device 1 of this embodiment may be an oven, which may include a body 10 and a chamber 20 arranged in the body 10. The chamber 20 is configured to store cooked food. For example, the cooking device 1 may have a door 30 that can open or close the chamber 20, and when the door 30 is opened, the chamber 20 is exposed for a user to take or place a cooked object 2 (food). When the door 30 is closed, the chamber 10 is closed. In this case, cooking operations such as heating and baking may be performed on the cooked object 2 placed in the chamber.

The cooking device 1 may further include an input/output module 101. Operating states of the cooking device 1 may be adjusted by operating the input/output module 101. The operating state of the cooking device 1 may include a heating power, a heating direction, a heating duration, a steam conveying capacity, a steam conveying direction, and the like. Adjustments to the operating states may be realized by adjusting operating states of specific functional modules in the cooking device 1.

Further, the cooking device 1 may further include a control module 11, which is configured to adjust the operating state of the corresponding functional module based on an instruction fed back by the input/output module 101, so that the operating state of the cooking device 1 conforms to user instructions.

For example, the cooking device 1 may include a heating module 12 configured to heat the cooked object 2. The cooking device 1 may include a plurality of heating modules 12, and the plurality of heating modules 12 are dispersedly arranged in different areas of the cooking device 1 to heat the chamber 20 from different angles, so that the cooked object 2 is heated as evenly as possible. The control module 11 may independently adjust a heating power of each of the heating modules 12 to adjust an amount of heat radiated by each heating module 12 into the chamber 20. The control module 11 may further independently adjust a heating direction of each heating module 12 to adjust a radiation angle at which each heating module 12 radiates heat into the chamber 20. The control module 11 may further adjust a heating duration for the specific heating module 12 to operate at a specific heating power, to heat the food to an expected effect.

For another example, the cooking device 1 may include a spray module (not shown) configured to deliver water vapor into the chamber 20 to adjust humidity in the chamber 20. Through adjustment to the humidity in the chamber 20, surface humidity of the cooked object 2 can be adjusted, so that the cooked object 2 has a moderate water content, to prevent the surface of the cooked object 2 from being heated to be excessively dry or excessively wet. The cooking device 1 may include a plurality of spray modules, and the plurality of spray modules are dispersedly arranged in different areas of the cooking device 1 to deliver water vapor into the chamber 20 from different angles, so that the humidity distribution on the surface of the cooked object 2 is balanced. The control module 11 may independently adjust a steam conveying capacity of each of the spray modules. The control module 11 may also independently adjust a steam conveying direction of each spray module. The control module 11 may further adjust a spraying duration for a specific spray module to operate at a specific steam conveying capacity.

It should be noted that the input/output module 101 in FIG. 1 may be a knob-like adjustment button. In a practical application, the input/output module 101 may further be set in other forms, such as a touch screen and a voice control module. The input/output module 101 may alternatively be a touch display panel with a touch function to realize data input and image information display.

Further, the control module 11 may perform the control method shown in FIG. 3 to monitor the cooking state of the cooked object 2 and automatically control the operating parameter of the cooking device 1. For example, the control module 11 may include or be externally connected to a memory (not shown). The memory stores a computer program. When the computer program is executed by a processor, the steps of the control method shown in FIG. 3 are performed.

It should be noted that only a possible arrangement position of the control module 11 in the cooking device 1 is displayed in FIG. 1 by using an example. In a practical application, a specific arrangement position of the control module 11 may be adjusted as required. In a variation, the control module 11 may be externally arranged on the cooking device 1 (for example, a remote server). The cooking device 1 is provided with a communication module (not shown), and the control module 11 communicates with the communication module to transmit a control instruction to the cooking device 1. The control instruction is used for controlling an operating state of the cooking device 1.

Further, the cooking device 1 may include an image capture apparatus 13 arranged in the chamber 20 or in the door 30 to capture food image data at at least one angle. The control module 11 communicates with the image capture apparatus 13 to obtain the food image data captured by the image capture apparatus 13.

For example, the image capture apparatus 13 may be a camera arranged on a top of the chamber 20 and covers at least a tray 14 within an overlooking range. A plurality of cameras may be arranged to shoot the cooked object 2 from different angles.

For example, the camera may further be arranged inside the door 30, and a shooting range includes at least an area where the cooked object 2 is located.

Further, the cooking device 1 may include a temperature detection apparatus (not shown) configured to detect a surface temperature and an internal temperature of a food, an internal temperature of the body, and the like.

For example, a temperature sensor (not shown) may be arranged in the chamber 20 to collect a temperature in the chamber 20. For another example, the tray 14 may be provided with a temperature sensor or a probe to collect the surface temperature or the internal temperature of the cooked object 2.

In a specific embodiment, referring to FIG. 3, the control method of the cooking device 1 in this embodiment may include the following steps.

Step S101: Preset N doneness recognition models respectively corresponding to N time points of doneness, where the models are configured to respectively recognize cooking states of a food at the corresponding time points of doneness in a cooking process, the time points of doneness are set based on a time sequence of the cooking process, each of the time points of doneness corresponds to a preset duration interval, and N is a positive integer greater than or equal to 1.

Step S102: Obtain a first food image of the food in the cooking process, and recognize the first food image through an n^{th} doneness recognition model to determine whether a current cooking state of the food reaches a corresponding n^{th} time point of doneness, where n is a positive integer less than or equal to N.

Step S103: Determine whether a cooking duration for the food to reach the current cooking state falls within a duration interval corresponding to the n^{th} time point of doneness when the current cooking state of the food reaches the corresponding n^{th} time point of doneness.

Step S104: Control the cooking device 1 based on a result of the determination.

Specifically, when the cooking is ready to be started, the prepared food is put into the cooking device 1. When the door 30 of the cooking device 1 is closed, the image capture apparatus 13 starts to work and captures a captured food image in real time. Alternatively, after the user sets cooking parameters such as a heating duration and a heating temperature and starts cooking, the image capture apparatus 13 starts to work.

The image capture apparatus 13 may store the captured image in a body memory or transmit the captured image to a memory of a remote server. The control module 11 recognizes the cooking state of the food based on the captured image, recognizes the real-time image by using the preset doneness recognition model, and adjusts the cooking parameter through comparison of the recognition result and the cooking time. In this way, the cooking process can be intelligently monitored, and the cooking parameter is adjusted in time when a cooking abnormality is found, so that the cooking result meets expectations.

The doneness recognition model may be stored in the memory in advance. The model may include standard images of food cooking states corresponding to a plurality of cooking time points, that is, time points of doneness of a food. The standard image may be understood as a state that the food should reach at the time point of doneness, which may include a color parameter, a shape parameter, and the like used for representing the state of the food. The standard image is obtained by training a large amount of experimental cooking data.

Through a large number of experiments, it is found that a same food may have perceptible changes in color and shape in different time periods, which is referred to as a time point of doneness (or a cooking time point) in this application. Color and shape changes of different foods vary. In the whole process, some foods change a plurality of times in color and shape, some change a few times, and some change in shape but almost do not change in color. For example, in the experiment, it is found that the time point changes four times in the cooking process of steak, and the time point changes twice in roasting of chicken wings.

Because each food includes a plurality of time points of doneness and cooking processes of different foods are different, different foods correspond to different numbers of time points of doneness. Correspondingly, in this application, for each type of food, such as steak and chicken wings, doneness recognition models corresponding to a plurality of time points of doneness may be preset respectively. Each of the doneness recognition models may be configured to recognize a food cooking state corresponding to the time point of doneness in a cooking process. The time point of doneness is set based on a time sequence of the cooking process.

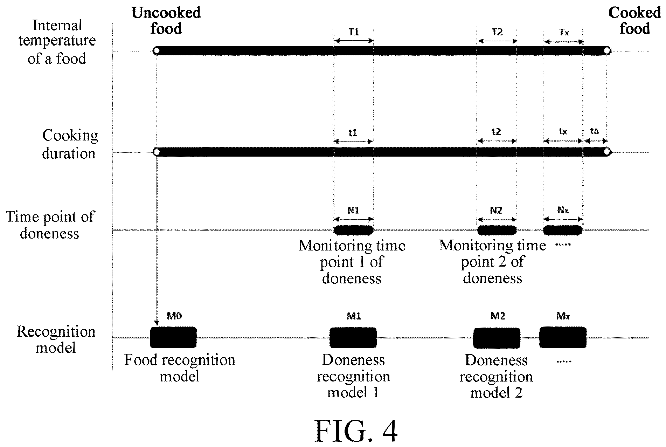

FIG. 4 shows a logical schematic diagram of a time point of doneness. First, doneness of a food is related to an internal temperature of the food and a cooking duration of the food. In combination with the correlation between the color and shape and the doneness in the cooking process of the food mentioned above, the time point of doneness of the food may be constructed.

For example, during the experiment, a probe is first inserted into a central position inside the food to draw a temperature curve, and then an average internal temperature curve T and a time axis are drawn after a lot of data is organized. By observing a video stream uploaded by the image capture apparatus 13, time points N (N = 1, 2, 3, ...) at which the food changes great in color in the cooking process are marked, to obtain a time range t of occurrence of the time points N, that is, a preset time point duration (afterward, adjustment to a duration parameter during cooking monitoring is mainly determined and performed based on the duration range of this time point).

Next, captured pictures at these time points are modeled through the image recognition technology. A plurality of recognition models may be established in the whole cooking process, such as a food recognition model (which is configured to recognize a food, and call a cooking parameter of a corresponding dish such as a duration/mode/temperature from a data management knowledge map). The doneness recognition models at different time points include a doneness recognition model of a time point N1 of doneness, a doneness recognition model of a time point N2 of doneness, a doneness recognition model of a time point Nx of doneness, and the like.

As described above, the number and setup positions of time point models are not constant, and different dishes change in color at different time points. Therefore, a food needs to be repeatedly tested to establish a proper time point and a doneness recognition model corresponding to the time point.

The doneness recognition model may be established and trained in the following manners. First, a time period during which the color/shape changes can be monitored is referred to as a time point of doneness. The whole color change of the time point is recorded, and an optimal point is determined as a model base sample of the stage based on an image recognition rate, and cooking-related professionals are asked to help calibrate normal color individuals of a single food model sample and a plurality of food model samples, and finally use the individuals as determination samples for the time point. A similarity of the single food sample needs to be more than 90% of the determination sample, and 80%-90% of the plurality of food samples need to reach the standard determination sample. This can ensure the doneness of the whole cooking, and also reduce unevenness of doneness caused by uneven hot air in some ovens. The doneness recognition model of the time point is obtained through repeated training.

During specific implementation, different cooking time points correspond to different standard images indicating the food doneness.

During specific implementation, the doneness recognition models are in one-to-one correspondence with types of foods.

For example, the memory may store a doneness recognition model corresponding to steak. Based on an experiment, four time points of doneness of cooking steak are established, and four doneness recognition models are preset in the corresponding memory. In the process of cooking steak, real-time images corresponding to the four time points of doneness may be captured, a cooking process of steak is monitored through the doneness recognition model of the corresponding time point, and a cooking parameter is adjusted when it is found that one of the cooking time points is abnormal, to control operation of the cooking device.

It should be noted that the above is only an example. In a practical application, a plurality of doneness recognition models respectively corresponding to a plurality of types of foods may be set in the memory, to extend a recipe range within which the cooking device 1 may intelligently cook, thereby performing automatic and intelligent cooking control of different types of foods.

In the food cooking process, the food cooking state or doneness of the corresponding time point is recognized through the doneness recognition model of the corresponding time point of the food. Specifically, the image capture apparatus 13 captures a food image in real time and compares the captured image with the doneness recognition model of the time point. When the food image matches the doneness recognition model of the time point, the current cooking state of the food reaches the corresponding time point of doneness.

In a specific embodiment, preferably, M consecutive food images of the food in a preset time in the cooking process are obtained, where M is a positive integer greater than or equal to 1. When all of the M food images are the same as an n^{th} doneness recognition model, it is determined that the current cooking state of the food reaches the corresponding n^{th} time point of doneness.

When at least one of the food images is different from the n^{th} doneness recognition model, the food image of the food in the cooking process is continuously obtained.

A remaining time is further introduced into this embodiment of the present invention. Specifically, through big data testing and analysis, an average time to reach the final cooking time point and the average total cooking duration are found out, and an empirical constant value tΔ is finally calculated, which is referred to as the remaining time, where tΔ = the average total cooking duration - the average time to reach the final cooking time point. When the duration for reaching the final time point is much greater than the average total cooking duration, there is no need to increase the time (the situation should be an abnormal situation), and the cooking ends directly. If the duration for reaching the final time point is less than or equal to the final time point duration, or is greater than the final time point duration and less than the average total cooking duration, the remaining time needs to be added (tΔ needs to be properly determined based on the training food and test data, and varies for different foods).

When the cooking process of the food reaches the corresponding cooking time point, the cooking duration for the food to reach the cooking time point may be further used to determine a relationship between the cooking duration and the preset cooking duration. When the cooking duration for the food to reach the current cooking state is not within the duration interval corresponding to the n^{th} time point of doneness, control is performed to increase or decrease a total cooking duration of the cooking device.

In an embodiment, when the cooking duration for the food to reach the current cooking state is not within the duration interval corresponding to the n^{th} time point of doneness, prompt information indicating that the current cooking state is an abnormal cooking state is displayed.

In a specific embodiment, parameters such as a heating time, a heating temperature, and a humidification mode of the cooking device may be adjusted based on comparison and recognition results.

Specifically, when it is determined based on the recognition result that the cooking state of the food exceeds the cooking state corresponding to the current cooking time point, control is performed to decrease the cooking time or the cooking temperature. When it is determined that the cooking state of the food does not reach the cooking state corresponding to the current cooking time point, control is performed to increase the cooking time or the cooking temperature.

For example, the cooking device 1 is used to cook steak, doneness selected by the user is medium well, and the expected cooking duration is 8 minutes. In the cooking process, the control module 11 monitors that at a third cooking time point, such as at 6 minutes of the cooking time, a comparison result between a real-time image and a standard image captured by the image capture apparatus 13 indicates that the current cooking state of the steak has exceeded the cooking state of steak in the corresponding standard image. If heating is continuously performed for preset 8 minutes, the final steak is probably well-done or not up to the expectation.

Therefore, the control module controls to reduce the total heating duration, for example, by 20 seconds, that is, to adjust the originally planned heating time of 8 minutes to 7 minutes and 40 seconds. Such fine tuning can well avoid overcooking, so that the cooking result meets the expectation.

In a specific embodiment, the method further includes: determining whether the n^{th} time point of doneness is a last time point in the cooking process; and determining, based on a relationship between the cooking duration for the food to reach the last time point and a preset average total cooking duration, whether to increase the total cooking duration of the cooking device by a remaining time t when the n^{th} time point of doneness is the last time point, where the remaining time t is a difference between the preset average total cooking duration of the food in the cooking process and a preset average cooking duration required for reaching the last time point.

If the cooking duration for the food to reach the last time point does not reach the preset average total cooking duration, control is performed to increase a cooking time of the cooking device by the remaining time t; or otherwise, the cooking device is controlled to stop operating.

Some foods almost do not change in color within a period of time at the beginning of the cooking process, but change only during several periods of time in the middle of the process. Some foods do not change in color and shape after the last time point, but the internal temperature thereof has not reached the set doneness. In this case, the above image recognition method cannot be used.

Based on this, in a specific embodiment, the doneness of the food may be determined based on a temperature. Specifically, the method further includes: obtaining a corresponding internal temperature of the food at the n^{th} time point of doneness; and controlling the cooking device based on the internal temperature.

In a variation, the cooking parameter may further be adjusted through the method in combination with the real-time internal temperature of the food. The real-time internal temperature of the food may be obtained through a probe or another sensor, and the cooking device 1 is controlled based on the real-time internal temperature and the current cooking state of the food.

Specifically, when the real-time internal temperature is lower than a standard temperature, the cooking time or the cooking temperature is increased, or otherwise, the cooking time is reduced or the cooking temperature is lowered. When the cooking state is monitored through image recognition, the cooking device 1 is controlled based on the internal temperature of the food, so that the cooking parameter can be better controlled to obtain the expected food cooking effect.

For example, during cooking, at a cooking time point, the internal temperature of the food does not reach the expected temperature, which may lead to a problem that the food is not well-done. The cooking time and the cooking temperature are adjusted by monitoring the internal temperature in real time. On the contrary, when the internal temperature of the food at the cooking time point is excessively high, overcooking of the food may be caused, and the overcooking may be avoided by monitoring the internal temperature in real time and intervening in advance.

For another example, during cooking of some foods (such as steak), a small difference exists in images of medium-well steak and well-done steak, or some foods almost do not change in appearance and color in a specific cooking process, which cannot be effectively recognized through the images. The cooking effect can be better controlled based on the internal temperature.

Further, when the internal temperature is lower than a preset standard temperature corresponding to the n^{th} time point of doneness, control is performed to increase the cooking time of the cooking device; or otherwise, control is performed to decrease the cooking time of the cooking device.

In a variation, the real-time image and the corresponding standard image of the food at the current cooking time point may be displayed through a display apparatus, to present the cooking state of the food at the current cooking time point. The display apparatus herein may be an input/output module 101, or may be a remote mobile device such as a mobile phone, a tablet computer, and a computer.

For example, in the cooking process, when a cooking time point is reached, the control module 11 may invoke a real-time image and a standard image of the time point stored in the control module and present the real-time image and the standard image to the user through the display apparatus. In this way, the cooking device may intelligently adjust the cooking process, and the user may also intuitively see the cooking state and the cooking progress of the food, so that user experience is better. In a specific embodiment, food recognition may be performed before the method, and the cooking state monitoring model is automatically matched based on the food recognition result. Specifically, a food recognition model configured to recognize a food is preset, a food image of a to-be-cooked food is obtained, the food image is recognized through the food recognition model, and N doneness recognition models corresponding to the food are determined based on a result of the recognition.

In a variation, the cooking device 1 may be provided with a plurality of image capture apparatuses 13, which are configured to obtain images and recognition results of cooked food at different angles, and determine one recognition result based on a priority to improve accuracy of food recognition. Specifically, at least two food images at a same capture moment are obtained, and a recognition result corresponding to one of the images is determined based on a preset first priority standard.

The first priority standard is determined based on accuracy of recognizing food by the food recognition model, and a higher accuracy leads to a higher priority of the recognition result corresponding to the food image. When the plurality of image capture apparatuses 13 capture food images at the same moment, the priority of recognition results may be determined based on the accuracy of recognizing food by the image capture apparatus 13, thereby further improving the recognition accuracy.

For example, the cooking device 1 includes two photographing apparatuses, which correspondingly obtain two images at the same capture moment that correspond to two recognition results. If the results are the same, the recognition result is outputted. If the results are different, recognition is performed again or a priority recognition result is determined based on the recognition accuracy of the camera during training. In the embodiment, the observation position with dual cameras is more comprehensive, especially in the monitoring stage of cooking. When some parts are burnt or the color changes excessively fast, for example, a single camera cannot capture the back closest to an oven hot fan, but dual cameras can immediately find the abnormality and make corresponding adjustments.

In a specific embodiment, the cooking state of a food may be monitored from different angles through a plurality of image capture apparatuses 13, and an abnormal cooking state of the food can be better and more timely monitored, so that the cooking process can be intervened in advance, and the cooking result can achieve the expected effect.

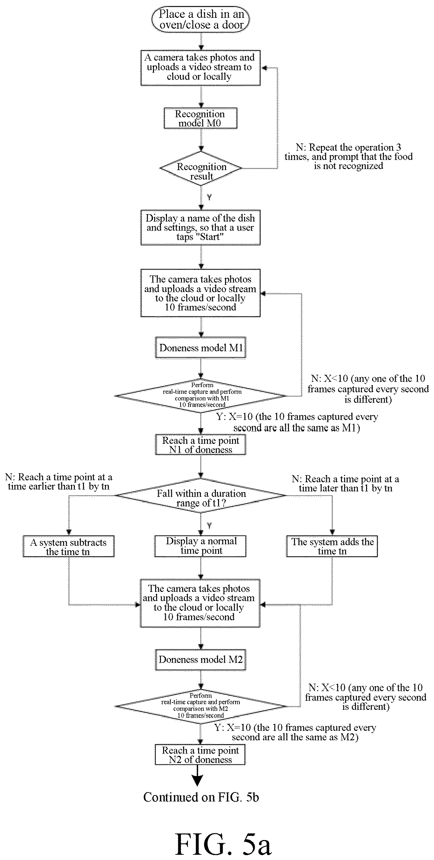

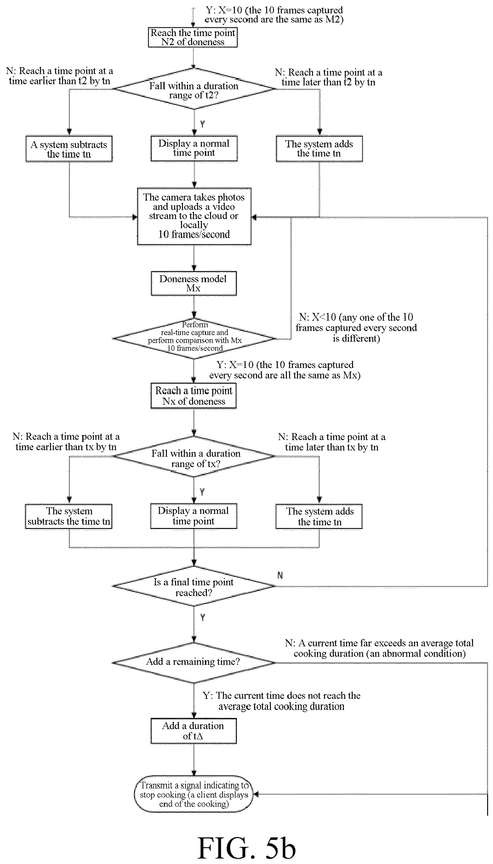

The content of the method is to be described in detail with reference to FIG. 5.

A user puts food in an oven and closes a door. A camera shoots the food. A video stream is uploaded to a cloud server or stored locally after graphic processing. The food is recognized through a food recognition model M0 in the server, and a name of the food and cooking parameters (a time, a temperature, a cooking mode, and the like) of a corresponding recipe are displayed through databases (related databases such as a cooking knowledge map, main recipes, and cooking parameters) in the server. If no recognition result is displayed in the process, the camera continues to upload the video stream and repeat the cycle for a specific number of times. If the recognition result is still not displayed, the system may display an error and a processing mode.

If the recognition is normal, the user clicks "Start Cooking", takes a picture through a camera, and uploads the video stream to the cloud or local with 10 frames per second. In this case, the system does not run to the time point of doneness, and the server only records the system log without displaying the recognition result.

A video recorded in real time is constantly compared with the doneness model M1. When 10 pictures captured every second are consistent with the model M1, a state of the dish reaches the time point N1 of doneness. When N1 is reached, it is determined through comparison whether the cooking duration falls within a duration range of t1 of a system time model. If the duration falls within the range, a normal time point is displayed for the outside. If the time to reach N1 is earlier than t1, the total cooking time is reduced, and if the time to reach N1 exceeds t1, the total cooking time needs to be increased.

For example, 22 minutes are spent to roast steak, and a first time point of doneness is between 7 minutes and 20 seconds and 10 minutes and 20 seconds. When 7 minutes are spent to reach N1 earlier than t1(7:20 to 10:20), the total system duration needs to be decreased by 20 seconds and changed to 21 minutes and 40 seconds. When 10 minutes and 50 seconds are spent to reach N1 later than t1 (7:20 to 10:20), the total system duration needs to be increased by 30 seconds and changed to 22 minutes and 30 seconds. When 8 minutes are spent to reach N1, which falls within a range of t1 (7:20 to 10:20), the system displays a normal time point, and the camera continues detection until the next time point N2 is reached.

The process of reaching N2 is basically the same as that of reaching N1, and details are not described again. For details, reference is made to the flowchart.

When the system reaches the last cooking time point, different processing modes are provided based on the knowledge map of different dishes. When the system finds that the last time point is reached, an empirical value, that is, the remaining time tΔ needs to be added to those dishes that change little in color and shape in the last stage but are not completely done based on the internal temperature.

If some dishes are cooked to the final time point and are well done, or if a duration for which an abnormality occurs is much longer than the average total cooking duration, there is no need to increase the total duration by the remaining time tΔ. The remaining time needs to be set based on a data result through specific analysis of a specific dish.

Finally, when all cooking times expire, the system sends a stop signal, and an oven and a mobile phone of the user receive an instruction to finish cooking and the cooking result.

A specific embodiment of the present invention further discloses a control system of a cooking device 1, including the cooking device 1 and a server that can interact with each other. A control module 11 may be arranged on the server, and the control module 11 is configured to perform the method described in FIG. 3. Specifically, the control module 11 is communicatively connected to the cooking device 1, and the cooking device 1 operates based on a cooking control parameter sent by the control module 11. In this way, the control module 11 is arranged on a remote server, and performs data processing such as recognition on the remote server, which not only facilitates training, learning, and updating of data such as models, and improves accuracy of data processing, but also reduces complexity of the cooking device. Therefore, a degree of intelligence of controlling the cooking device is improved.

An embodiment of the present invention further provides a computer-readable storage medium. The computer-readable storage medium is a non-volatile storage medium or a non-transient storage medium, on which a computer program is stored. When the computer program is run by a processor, the steps of the control method provided in any of the above embodiments are performed.

Although specific implementations have been described above, these implementations are not intended to limit the scope of the present disclosure, even if the same is true for a case that a single implementation is described only with respect to specific features. The feature examples provided in the present disclosure are intended to be illustrative and not limiting, unless otherwise stated. In a specific embodiment, technical features of one or more dependent claims may be combined with technical features of the independent claims, and the technical features from the corresponding independent claims may be combined in any appropriate way rather than only by a specific combination listed in the claims.

Although the present invention is disclosed above, the present invention is not limited thereto. A person skilled in the art can make various changes and modifications without departing from the spirit and the scope of the present invention. Therefore, the protection scope of the present invention should be subject to the scope defined by the claims.

## Claims

1. A control method of a cooking device, comprising:
presetting N doneness recognition models respectively corresponding to N time points of doneness, wherein the models are configured to respectively recognize cooking states of a food at the corresponding time points of doneness in a cooking process, the time points of doneness are set based on a time sequence of the cooking process, each of the time points of doneness corresponds to a preset duration interval, and N is a positive integer greater than or equal to 1;
obtaining a first food image of the food in the cooking process, and recognizing the first food image through an n^{th} doneness recognition model to determine whether a current cooking state of the food reaches a corresponding n^{th} time point of doneness, wherein n is a positive integer less than or equal to N;
determining whether a cooking duration for the food to reach the current cooking state falls within a duration interval corresponding to the n^{th} time point of doneness when the current cooking state of the food reaches the corresponding n^{th} time point of doneness; and
controlling the cooking device based on a result of the determination.

2. The method according to claim 1, comprising: determining that the current cooking state of the food reaches the corresponding n^{th} time point of doneness when the first food image matches the n^{th} doneness recognition model.

3. The method according to claim 2, comprising:
obtaining M consecutive first food images of the food in a preset time in the cooking process, wherein M is a positive integer greater than or equal to 1; and
determining that the current cooking state of the food reaches the corresponding n^{th} time point of doneness when all of the M first food images are the same as the n^{th} doneness recognition model.

4. The method according to claim 3, further comprising: continuously obtaining the first food image of the food in the cooking process when at least one of the first food images is different from the n^{th} doneness recognition model.

5. The method according to claim 1, **characterized in that**, when the cooking duration for the food to reach the current cooking state is not within the duration interval corresponding to the n^{th} time point of doneness, control is performed to increase or decrease a total cooking duration of the cooking device.

6. The method according to claim 1 or 5, **characterized in that**, when the cooking duration for the food to reach the current cooking state is not within the duration interval corresponding to the n^{th} time point of doneness, prompt information indicating that the current cooking state is an abnormal cooking state is displayed.

7. The method according to claim 1, further comprising:
determining whether the n^{th} time point of doneness is a last time point in the cooking process; and
determining, based on a relationship between the cooking duration for the food to reach the last time point and a preset average total cooking duration, whether to increase the total cooking duration of the cooking device by a remaining time t when the n^{th} time point of doneness is the last time point, wherein the remaining time t is a difference between the preset average total cooking duration of the food in the cooking process and a preset average cooking duration required for reaching the last time point.

8. The method according to claim 7, further comprising: performing control to increase a cooking time of the cooking device by the remaining time t if the cooking duration for the food to reach the last time point does not reach the preset average total cooking duration; or otherwise, controlling the cooking device to stop operating.

9. The method according to claim 1, further comprising:
obtaining a corresponding internal temperature of the food at the n^{th} time point of doneness; and
controlling the cooking device based on the internal temperature.

10. The method according to claim 9, **characterized in that**, when the internal temperature is lower than a preset standard temperature corresponding to the n^{th} time point of doneness, control is performed to increase a cooking time of the cooking device; or otherwise, control is performed to decrease the cooking time of the cooking device.

11. The method according to claim 1, further comprising: before the method,
presetting a food recognition model configured to recognize a food;
obtaining a second food image of a to-be-cooked food;
recognizing the second food image through the food recognition model; and
determining N doneness recognition models corresponding to the food based on a result of the recognition.

12. A cooking device, comprising a body and a control module arranged on the body,
wherein the control module is configured to perform the method according to any of claims 1 to 11.

13. A control system of a cooking device, comprising a control module, wherein the control module is configured to perform the method according to any of claims 1 to 11.

14. The system according to claim 13, further comprising a cooking device, wherein the control module is communicatively connected to the cooking device, and the cooking device operates based on a cooking control parameter sent by the control module.
